# EUROPEAN PATENT APPLICATION

(11) **EP 2 826 566 A1**
(43) Date of publication of application: **21.01.2015**
(21) Application number: 13176520.8
(22) Date of filing: 15.07.2013
(51) Int. Cl.: B05B 5/04, B05B 3/10

(54) **Use of a foil bearing in a rotary atomizer, method of spray drying, and rotary atomizer for a spray drying apparatus**

(71) Applicant: GEA Process Engineering A/S, 2860 Søborg (DK)
(72) Inventor: Thomsen, Klaus Kristian, 3070 Snekkersten (DK)
(74) Representative: Carlsson, Eva

(57) **Abstract**

The rotary atomizer is intended for a spray drying apparatus and comprises a feed supply pipe (104), a drive motor (102), a drive shaft (107), one or more bearings (111, 112, 113) supporting or guiding the drive shaft, and an atomizer wheel (106). At least one of the bearing or bearings (111, 112, 113) is a foil bearing. An additional supply device (114) for air or gas may be provided to be connected to the at least one foil bearing (111,112). Furthermore, the additional supply device (114) may be connected to further opening into a position nearby the atomizer wheel (106) by means of a branch connection (115).

## Description

### Field of the invention

The present invention relates to the use of at least one foil bearing in a rotary atomizer. The invention furthermore relates to a method of spray drying by means of a rotary atomizer, and to a rotary atomizer for a spray drying apparatus.

### Background of the invention

In the atomization of a liquid feed, atomization may take place according to two main principles, namely by nozzle atomization and rotary atomization. Nozzle atomization is typically carried out by single fluid pressure nozzles or two-fluid nozzles, whereas rotary atomizers including atomizer wheels are used for a variety of fields of application.

In a rotary atomizer, liquid feed flow is directed to the atomizer wheel, and at high peripheral speeds of the atomizer wheel, liquid disintegration occurs right at the atomizer wheel edge by frictional effects between air or gas and the liquid surface. The liquid emerges as a thin film from the channels or orifices of the atomizer wheel. Examples of such rotary atomizers and details of the atomizer wheel are shown in European patents Nos EP 0 644 802 B1 and EP 1 184 081 B1 (both to Niro).

The pattern of the droplets of atomized liquid depends upon several factors such as liquid properties, speed and configuration of the atomizer wheel, etc. Bulk density of the resulting powder is also one of the factors for spray dried products. Different atomizer wheel configurations, optimum atomizer speed and relevant feed properties yield desired results. The normal operational range is between 5,000 to 25,000 rpm but may be lower, e.g. 3,000 rpm or higher, e.g. 35,000 rpm. The atomizer wheel typically has a diameter of 5 to 50 cm. Several types and sizes are available to handle products in the fields of dairy, fine chemicals, pharmaceutical, sanitary food processing and heavy-duty chemical processing. The size range varies between a small air-driven laboratory unit which handles from 1-10 kg/h of liquid feed, to the largest commercial unit driven by 1,000 kW motors which can handle liquid feed in excess of 200 metric ton/hour. Rotation of the atomizer wheel may be provided by a drive motor coupled to a drive shaft, possibly via a gear transmission or a belt drive but the atomizer wheel may also be arranged in a direct drive.

In one commercially available rotary atomizer, the F15D by GEA Niro, the atomizer wheel is driven directly via a shaft which in turn is supported by sealed bearings which are delivered in a greased condition. As the bearings are sealed, the lubricant is prevented from coming into contact with the product to be atomized. This is a particularly important feature in the processing of i.a. food, dairy and pharmaceuticals, in which contamination of the product is not acceptable.

In such rotary atomizers, the energy required to break up the liquid feed into droplets is provided by the rotation of the atomizer wheel brought about by the motor acting on the drive shaft or spindle. In turn, this means that a high speed is needed in order to provide the necessary energy. Although the above-mentioned rotary atomizers are all well-functioning and, if special precautions such as sealed bearings are taken, fulfil the requirements to no or only limited risk of contamination, great demands are posed on the bearings supporting the drive shaft, and the wear and tear of the bearings are underlined by factors such as local heating due to friction. In fact, even though great care is taken in the design of the bearings, and monitoring of the bearing temperature is optionally carried out, the expected lifespan of the bearings is limited. This may increase the amount of down-time to carry out additional monitoring and checking of the parts of the rotary atomizer in order to prevent break-down or damage to the atomizer itself or the production of an inferior product.

### Summary of the invention

With this background it is an object of the present invention to provide spray drying of a product in a secure, contamination-free and cost-effective manner.

In a first aspect of the invention, this and further objects are met by the use of at least one foil bearing in a rotary atomizer for a spray drying apparatus. Foil bearings have proven to be suitable for high speed rotation of drive shafts of a limited weight and subjected to limited static and dynamic loads. Furthermore, they present lower friction than traditional bearings such as roller bearings. Hence, the lifetime is increased and the maintenance and replacements costs are reduced. As an additional advantage, the foil bearings operate on air or other processing gas, such as inert gas, without the need for lubricants, thus eliminating the risk of contamination of the product to be spray dried.

The use of at least one foil bearing to support a substantially vertical drive shaft of an atomizer wheel in a rotary atomizer for a spray drying apparatus for the production of a food grade product is particularly advantageous, due to the eliminated risk of contamination of the product by any lubricant.

In a second aspect of the invention, a method of spray drying a liquid feed in a spray drying apparatus, comprising the steps of:
providing a rotary atomizer with a feed supply pipe, a drive motor, a substantially vertical drive shaft and an atomizer wheel,
providing at least one foil bearing to support the drive shaft,
rotating the drive shaft and the atomizer wheel at a desired rotational speed, and
feeding the liquid feed to the atomizer wheel via the feed supply pipe.

Providing at least one foil bearing to support the drive shaft entails the advantage that the method may be carried out with reduced maintenance costs, as there is a reduced need for monitoring and check of the bearings, and the interval between the need to provide spare bearings is longer than in traditional bearings. Furthermore, no lubricant such as oil needs to be supplied. Eventually, there is the advantage that the contamination risk from any lubricant coming into contact with the product is eliminated, which is of particular importance in the spray drying of a liquid feed comprising food or dairy.

The provision of foil bearing is a well-established technique, and such foil bearings may be provided both as journal bearings taking up forces in the radial direction only, and as thrust bearings for axial support, and also as guide bearings. Thus, according to the invention, the at least one foil bearing may be provided to support the drive shaft in the radial direction, in the axial direction or in the radial and axial directions.

Furthermore, the method may be carried out with any kind of torque transmitting arrangement, and hence the drive motor may drive the drive shaft directly, via a coupling and/or via a gear transmission.

Advantageously, the drive motor is chosen from the group comprising a high frequency asynchronous motor, permanent magnets motor, and turbine drive motor.

The rotational speed of the atomizer wheel of the rotary atomizer should be chosen according to factors dependent on the product etc. The atomizer wheel may operate at a rotational speed of 10,000 to 40,000 rpm, preferably 15,000 to 25,000 rpm. The invention may be used on both supercritical and sub-critical operated machines, i.e. having either flexible or stiff drive shafts.

Depending on the dimensions of the atomizer wheel and the rotational speed, the peripheral velocity of the atomizer wheel lies in the range 50 to 400 m/s.

The foil bearing or foil bearings may be self-acting in operation in that each foil bearing obtains the required air or gas from the surrounding internal space of the rotary atomizer. However, in a preferred embodiment an additional supply device provides air or gas to the foil bearing or bearings during start-up and stop to ensure proper support of the drive shaft. For drive shaft positioning, the additional supply device may optionally be controlled to provide air or gas in an asymmetrical manner about the circumference of the drive shaft. Controlling the flow of air or gas in this manner provides the possibility to control the movement of the shaft. The control may take place on the basis of suitable positioning of sensors, which in turn provides appropriate dosing of air or gas to move the shaft to the desired position. In this manner, a hybrid bearing is achieved which provides hydrodynamic (i.e. here aerodynamic, as the medium is air or gas) as well as hydrostatic (i.e. here aerostatic) support and guiding of the shaft. Thus, suitable control makes it possible to counteract or dampen the dynamic forces that arise from imbalances in the atomizer wheel and other forces in the rotary atomizer due to for instance the feed flow.

In a particularly advantageous further development of the preferred embodiment, the additional supply device is further opening into a position nearby the atomizer wheel to provide a barrier gas. This makes it possible to counteract the tendency of the rotating atomizer wheel to suck heated processing air or gas mixed with product to the top face of the atomizer wheel, where deposits may form to the deterioration of the atomizer wheel.

In a third aspect of the invention, a rotary atomizer is provided for a spray drying apparatus, comprising a feed supply pipe, a drive motor, a substantially vertical drive shaft, at least one bearing supporting or guiding the drive shaft, and an atomizer wheel, **characterized in that** at least one bearing is a foil bearing.

The provision of a foil bearing or foil bearings makes it possible to reduce the maintenance costs of the rotary atomizer and the friction between the bearing or bearings and the drive shaft is reduced. The contamination risk from any lubricant coming into contact with the product is eliminated, which is of particular importance in rotary atomizer for use in spray drying apparatus handling food grade products.

The provision of foil bearing is a well-established technique, and such foil bearings may be provided both as journal bearings taking up forces in the radial direction only, guide bearings, and as thrust bearings for axial support. Thus, according to the invention, the at least one foil bearing may be provided to support the drive shaft in the radial direction, in the axial direction or in the radial and axial directions.

The drive motor may be connected directly to the drive shaft or via a coupling and/or via a gear transmission, and the drive motor is preferably chosen from the group comprising a high frequency asynchronous motor, permanent magnets motor, and turbine drive motor.

The foil bearing or foil bearings may be provided without air/gas supply, but in presently preferred embodiment, an additional supply device for air or gas is connected to the at least one foil bearing.

In a development of the presently preferred embodiment, the additional supply device is connected to the atomizer wheel by means of a branch connection. In this manner, it is possible to provide a barrier gas exiting on the top side of the atomizer wheel to prevent inflow of heated air or processing gas entraining particles of the product that might otherwise deposit on the atomizer wheel.

Further advantages and details will appear from the following description of preferred embodiments.

### Brief description of the drawings

Figs 1 and 2 are views of a prior art rotary atomizer;
Fig. 3 is a view corresponding to Fig. 1 of an embodiment of a rotary atomizer according to the invention; and
Fig. 4 is a principle sketch indicating the manner of functioning of a foil bearing denoted with reference numerals of one embodiment of the present invention.

### Description of preferred embodiments

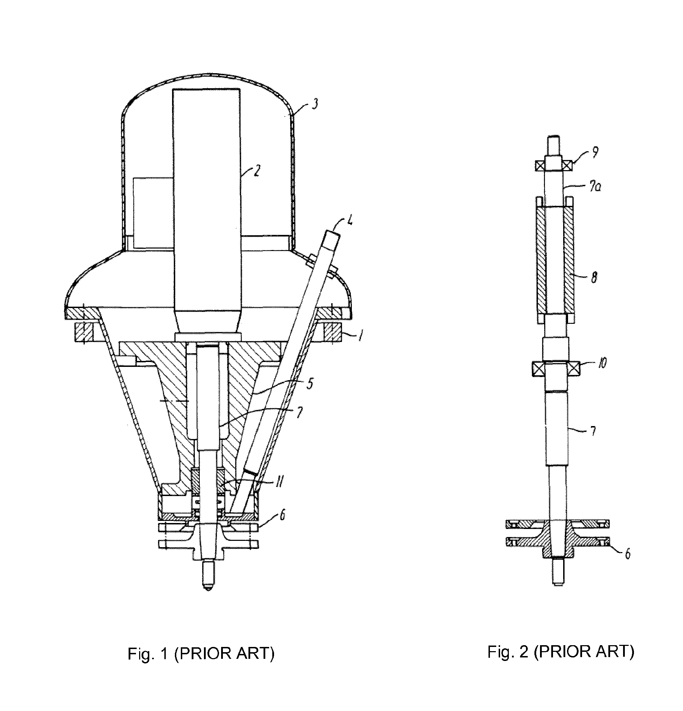

Figs 1 and 2 show a prior art rotary atomizer as shown and described in document EP 0 644 802 B1, the parts of which will be referred to in the present description by the reference numerals of the document. The rotary atomizer is designed for installation in the upper part of a spray drying chamber and comprises a support bracket 1 for connection with a ceiling wall of the chamber. The support bracket 1 supports the casing 2 of a drive motor in the form of a high frequency asynchronous electric motor. The motor casing 2 is covered by an external shield 3 which may protrude above the ceiling of the chamber and through which a feed pipe 4 for the supply of the product to be atomized extends downwards through the lower atomizer casing 5 to terminate at the atomizer wheel 6. An atomizer wheel 6 is secured at the lower end of a drive shaft 7. A rotor winding 8 of the motor is secured to an upper part 7a of the drive shaft 7. The drive shaft 7 is designed as a relatively slender solid spindle which is radially support by bearings 9 and 10 arranged on either side of the upper part 7a of the drive shaft 7 in the motor casing 2. The lower bearing 10 also serves as an axial support of the drive shaft 7. Relatively close above the atomizer wheel 6, a guide bearing 11 having a radial clearance relative to the drive shaft 7 is arranged in the lower atomizer casing 5.

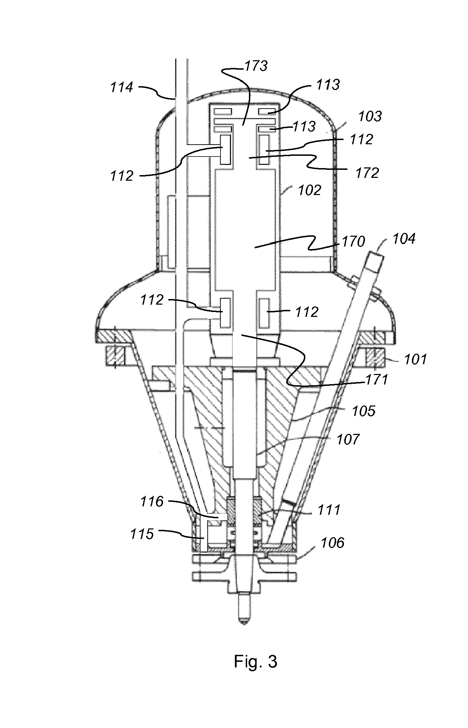

Referring now to Fig. 3, a rotary atomizer in an embodiment of the present invention will be described in some detail. For simplicity, parts of the embodiment of the rotary atomizer according to the invention having the same or analogous function are denoted by the same reference numerals as in the above description of the prior art rotary atomizer to which 100 has been added. It is noted that the design and function of such parts may vary relative to the prior art parts without deviating from the present invention.

Hence, in the embodiment of Fig. 3, a rotary atomizer adapted to be mounted in a spray drying apparatus (not shown) comprises a feed supply pipe 104, a drive motor denoted by its casing 102, a substantially vertical drive shaft 107, a number of bearings 111, 112, 113 supporting and/or guiding the drive shaft 107, and an atomizer wheel 106. As will be described in further detail below, at least one bearing is a foil bearing, in the embodiment shown bearings 111, 112 and 113.

The drive shaft 107 comprises a section 170 of enlarged diameter surrounded by two sections 171 and 172 having a smaller diameter. At the upper end of the drive shaft 107, a top section 173 is formed.

Foil bearings 112 support the drive shaft 107 in the radial direction at sections 171 and 172, and foil bearings 113 support the drive shaft 107 in the axial direction at top section 173.

Further foil bearings may be present to provide support of the drive shaft in the radial direction, in the axial direction or in the radial and axial directions.

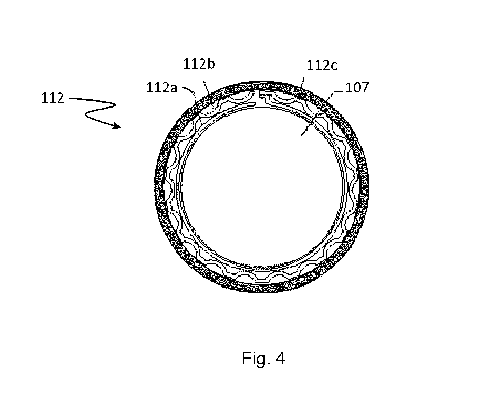

Fig. 4 is a principle sketch of a foil bearing indicating the manner of functioning of a foil bearing denoted with reference numerals of one embodiment of the present invention. Thus, the bearing 112 comprises a top foil 112a facing the drive shaft 107 of the rotary atomizer in the embodiment shown in Fig. 3. A bumper foil 112b is inserted between the top foil 112a and a bearing shell 112c. During operation, a supporting layer or film of air or gas is formed between the top foil 112a and the drive shaft 107.

Each foil bearing may be manufactured as described in any one of the embodiments of document WO 2011/044110 A2. Particular reference is made to the embodiment of Figs 1 to 10 and described in paragraphs [0058] to [0087].

The drive motor 102 is in the embodiment shown connected directly to the drive shaft 107. Other conceivable driving arrangements include the use of couplings and/or gear transmissions. The drive motor is in the embodiment shown a high frequency asynchronous motor which may be controlled in any suitable manner, but may also be a permanent magnets motor, or turbine drive motor.

The foil bearings of the rotary atomizer in accordance with the invention may in principle be self-acting and generate the film of air by the rotation of the drive shaft 107 alone. However, in the embodiment shown, an additional supply device 114 for air or gas is connected to the rotary atomizer to supply at least the foil bearings 112 with air or gas. The gas is any gas suitable for the purpose and may for instance be the same as the drying gas utilized for spray drying and is air or an inert gas. In a closed-cycle system, the gas may for instance be nitrogen.

As shown in the lower portion of Fig. 3, the additional supply device 114 is further opening into a position nearby the atomizer wheel 106 by means of a branch connection 115. Furthermore, the supply device 114 is also connected to a further branch connection 116 supplying the guide bearings 111 with air or gas.

The rotational speed of the atomizer wheel 106 of the rotary atomizer should be chosen according to factors dependent on the product etc. The atomizer wheel may operate at a rotational speed of 10,000 to 40,000 rpm, preferably 15,000 to 25,000 rpm. The invention may be used on both supercritical and sub-critical operated machines, i.e. having either flexible or stiff drive shafts.

The choice of material of the elements of the foil bearings may readily be chosen by the person skilled in the art. Typical materials of the top foil and the bumper foil comprise metals, alloys, non-metallic materials. The surface may be coated or otherwise treated by a suitable surface treatment or doping to provide a tribologically appropriate surface. More than one top foil and bumper foil may be present in each bearing and have any suitable configuration. For instance, the bumper foil needs not be a foil element as such, as long as it is able to provide the flexibility and damping properties aimed at.

The movement of the shaft may be controlled by the flow of air or gas. The control may take place on the basis of suitable positioning of sensors, which in turn provides appropriate dosing of air or gas to move the shaft to the desired position. Air or gas is introduced through small nozzles having a diameter of possibly 0.1-0.5 mm in the top foil.

In this manner, a hybrid bearing is achieved which provides hydrodynamic or aerodynamic as well as hydrostatic or aerostatic support and guiding of the shaft. Suitable control makes it possible to counteract or dampen the dynamic forces that arise from imbalances in the atomizer wheel and other forces in the rotary atomizer due to for instance the feed flow.

For further reference regarding the active control of air bearings in general, the thesis "From Hybrid to Actively-Controlled Gas Lubricated Bearings - Theory and Experiment, Stefano Morosi, DTU Mechanical Engineering. DCAMM Special Report No. S137, September 2011, and Analytical and experimental investigations of hybrid air foil bearings, Manish Kumar, Texas A&M University, August 2008, are incorporated herein.

As an example, the commercially available rotary atomizer F15D by GEA Niro would be able to incorporate one or more foil bearings with the following operating conditions: Statically a vertical load in the order of 75-150 N has to be supported. Radially there are no static loads but only dynamic loads, presumably in the order of 60-120 N when running 25000 rpm. The dynamic loads are combinations of synchronous loads caused by mechanical unbalance and process induced loads of a transient nature. The machine operates between 1st and 2nd critical speed and typically it starts/and stops once a day.

The invention should not be regarded as being limited by the embodiments shown and described in the below. Various modifications and combinations may be carried out without deviating from the scope of the appended claims.

## Claims

1. Use of at least one foil bearing in a rotary atomizer for a spray drying apparatus.

2. Use of at least one foil bearing to support a substantially vertical drive shaft of an atomizer wheel in a rotary atomizer for a spray drying apparatus for the production of a food grade or pharmaceutical product.

3. A method of spray drying a liquid feed in a spray drying apparatus, comprising the steps of:
providing a rotary atomizer with a feed supply pipe, a drive motor, a substantially vertical drive shaft and an atomizer wheel,
providing at least one foil bearing to support the drive shaft,
rotating .the drive shaft and the atomizer wheel at a desired rotational speed, and
feeding the liquid feed to the atomizer wheel via the feed supply pipe.

4. The method of claim 3, wherein at least one foil bearing is provided to support the drive shaft in the radial direction, in the axial direction or in the radial and axial directions.

5. The method of any one of claims 3 to 4, wherein the drive motor drives the drive shaft directly, via a coupling and/or via a gear transmission.

6. The method of any one of claims 3 to 5, wherein the drive motor is chosen from the group comprising a high frequency asynchronous motor, permanent magnets motor, and turbine drive motor.

7. The method of any one of claims 3 to 6, wherein the atomizer wheel operates at a rotational speed of 10,000 to 40,000 rpm, preferably 15,000 to 25,000 rpm.

8. The method of any one of claims 3 to 7, wherein the peripheral velocity of the atomizer wheel lies in the range 50 to 400 m/s.

9. The method of any one of claims 3 to 8, wherein an additional supply device for air or gas is connected to the at least one foil bearing, preferably controllable in an asymmetrical manner about the circumference of the drive shaft.

10. The method of claim 9, wherein the additional supply device is further opening into a position nearby the atomizer wheel to provide a barrier gas.

11. A rotary atomizer for a spray drying apparatus, comprising a feed supply pipe (104), a drive motor (102), a substantially vertical drive shaft (107), at least one bearing (111, 112, 113) supporting or guiding the drive shaft, and an atomizer wheel (106), **characterized in that** at least one bearing (111, 112, 113) is a foil bearing.

12. A rotary atomizer according to claim 11, wherein said at least one foil bearing (112, 113) is provided to support the drive shaft in the radial direction, in the axial direction or in the radial and axial directions.

13. A rotary atomizer according to claim 11 or 12, wherein drive motor (102) is connected directly to the drive shaft (107) or via a coupling and/or via a gear transmission.

14. A rotary atomizer according to any one of claims 11 to 13, wherein the drive motor (102) is chosen from the group comprising a high frequency asynchronous motor, permanent magnets motor, and turbine drive motor.

15. A rotary atomizer according to any one of claims 11 to 14, wherein an additional supply device (114) for air or gas is connected to the at least one foil bearing (111,112).

16. A rotary atomizer according to claim 15, wherein the additional supply device (114) is further opening into a position nearby the atomizer wheel (106) by means of a branch connection (115).
